# EUROPÄISCHE PATENTSCHRIFT

(11) **EP 0 593 964 B1**
(45) Veröffentlichungstag und Bekanntmachung des Hinweises auf die Patenterteilung: **15.04.1998**
(21) Anmeldenummer: 93115957.8
(22) Anmeldetag: 02.10.1993
(51) Int. Cl.: B23D 19/08

(54) **Blechschneidemaschine**
Cutting machine for sheet material
Machine pour la coupe de tôles

(30) Priorität: 21.10.1992 CH 3260/92
(43) Veröffentlichungstag der Anmeldung: 27.04.1994
(73) Patentinhaber: MABI AG, CH-5200 Windisch (CH)
(72) Erfinder: Biland, Max, CH-5200 Windisch (CH)
(74) Vertreter: Groner, Manfred, Dr.

(56) Entgegenhaltungen:
- EP-A- 0 123 183
- EP-A- 0 147 816
- DE-A- 2 136 267
- DE-A- 3 813 128
- US-A- 4 495 845
- US-A- 4 548 115

## Beschreibung

Die vorliegende Erfindung bezieht sich auf eine Blechschneidemaschine gemäß Oberbegriff von Patentanspruch 1.

Diese Blechschneidemaschine besitzt eine Arbeitsauflageebene, eine Blechtransporteinrichtung entlang einer Tischseite einer Auflageeben, sowie einen auf die Tischseite zu- und wegbewegbaren und um eine Achse senkrecht zur Auflagebene verschwenkbaren bzw. drehbaren Schneidkopf, der im Bereich der Auflageebene Messer und Gegenmesser aufweist.

Eine gattungsgemäße Vorrichtung zum Schneiden von Blech ist bereits in der EP-A 0 147 816 beschrieben. Diese Blechschneidevorrichtung dient zum Entfernen von überstehenden Ecken und Bandanrissen und ermöglicht das Ausschneiden von Bandsegmenten und Bandstreifen. Dies geschieht mittels eines in das zu schneidende Blechband einfahrenden Messerpaares, das aus einem oberen und einem unteren Kreismesser besteht, wobei das Messerpaar durch einen sich auf einer Kurve bewegenden Schwenkantrieb angetrieben wird.

Bei der Blechschneidemaschine der vorliegenden Erfindung ist die Auflageebene in Richtung des Blechtransportes in zwei voneinander distanzierte Teile unterteilt. Dazwischen ist ein beweglicher Schneidkopf angeordnet. Am Ende des ersten Teils befindet sich ein zur Vorschubrichtung quer orientiertes Vorschubwalzenpaar, das eine ganze Blechplatte in Vorschubrichtung gegen den hinteren Teil der Auflageebene bewegt und damit die Blechplatte in dem gesteuerten Schneidkopf hineindrückt. Am Anfang des zweiten Teils der Auflageebene ist ein zweites Vorschubwalzenpaar in Form eines Zugwalzenpaares vorhanden, das das voranlaufende Ende der Blechplatte ergreift und mit der durch das erste Vorschubwalzenpaar vorgegebenen Vorschubgeschwindigkeit zieht und den Vorschub allein aufrecht erhält, wenn das nachlaufende Ende das erste Vorschubwalzenpaar verlässt. Messer und Gegenmesser des Schneidkopfes bilden zwei freilaufende Kreismesser. Die aktive Schneidkraft wird primär von den Walzen aufgebracht.

Die beschriebene Gattung wird für die Herstellung beziehungsweise für das Zuschneiden von dünnen Blechformen, wie sie zum Beispiel für die Herstellung von Isolierverschalungen mit den verschiedensten Raumformen benötigt werden, verwendet. Die Isolierverschalungen an sich, aber noch viel mehr die einzelnen Zuschnitte für den Aufbau von Bögen, Kalotten, Stutzen, Konusformen usw. weisen eine enorme Formenvielfalt auf, die aber geometrisch doch relativ genau bestimmbar sind. Über einen programmgesteuerten Schneidkopf kann der Zuschnitt exakt und sehr schnell erfolgen. Die Programmsteuerung kontrolliert und koordiniert alle wesentlichen Bewegungen. Der Nachteil dieser Maschine besteht darin, dass die Länge der zu schneidenden Blechplatten in Vorschubrichtung grösser sein muss, als der Abstand der beiden Vorschubwalzenpaare. Auch ist die Blechdicke durch die abwechselnd ziehende, stossende Vorschubeinrichtung relativ begrenzt.

Bei einer zweiten bekannten Ausführungsform wird dieser Nachteil durch das Weglassen der Vorschubwalzenpaare erreicht. Der Vorschub wird durch eine seitlich der Auflageebene in Vorschubrichtung längsverschiebliche Transporteinrichtung bewirkt, an der die Blechplatte für den Schneidvorgang befestigt wird. Um ein Verwerfen der Blechplatte während des Schneidvorganges zu vermeiden, ist der Schneidkopf mit Stanzschnittmessern ausgerüstet, was aber den Nachteil einer vergleichsweise grossen Lärmentwicklung während des Schneidens der Blechplatte hat.

Die vorliegende Erfindung stellt sich die Aufgabe, eine Blechschneidmaschine der eingangs genannten Art derart zu verbessern, dass sie in Vorschubrichtung auch kurze Blechplatten mit hoher Leistung präzise und geräuscharm schneiden kann.

Erfindungsgemäss wird diese Aufgabe durch die kennzeichnenden Merkmale des Anspruchs 1 gelöst. Es entsteht dadurch eine echte Zusammenarbeit zwischen der Blechtransporteinrichtung einerseits sowie der Kreismesser, da die aktive Schneidkraft nicht durch Zug- und Stosskräfte von Vorschubwalzen und auch nicht durch einen stanzartigen Schneidkopf aufgebracht werden muss.

Die Erfindung erlaubt eine ganze Anzahl besonders vorteilhafter Ausgestaltungen. Bevorzugt werden beide Messer als angetriebene Kreismesser ausgebildet. Damit können Vorteile der beiden einleitend erwähnten Lösungen vereint werden, indem nun selbst kürzeste Bleche optimal ausgenützt und geschnitten werden können, wobei die Schneidmesser ausgesprochen ruhig arbeiten. Der Schneidkopf wird über einen fernsteuerbaren Antrieb vorzugsweise quer zu der Tischseite verschiebbar angeordnet. Es ist aber auch möglich, eine leicht schräge Verschiebebahn auszubilden, so dass die Auflage für die Blechplatte noch besser wird.

Ferner wird vorgeschlagen, dem Schneidkopf und der als Vorschubeinrichtung gestalteten Führung je Einzelantriebe zuzuordnen. Die Vorschubgeschwindigkeit der Vorschubeinrichtung wird von einem Rechner signalisiert, der den Einzelantrieb des Schneidkopfes derart steuert, dass die Tangentialgeschwindigkeit der Kreismesser in Vorschubrichtung eine Geschwindigkeitskomponente aufweist, die in Richtung und Grösse der Vorschubgeschwindigkeit mindestens näherungsweise entspricht.

Vorteilhafterweise werden die Einzelantriebe der Kreismesser fest am Schneidkopf angeordnet, wobei ganz besonders bevorzugt der Gesamtschwerpunkt des Schneidkopfes einschliesslich der Einzelantriebe mindestens näherungsweise auf der Schwenk- bzw. Drehachse des Schneidkopfes liegt.

Da durch die Programmsteuerung alle Bewegungen für den Schneidvorgang mit noch grösserer Geschwindigkeit durchführbar sind, ergeben sich durch die einzelnen Antriebe besonders der Einzelantriebe der Kreismesser kreiselartige Richt-Kräfte die bei rascher Dreh-Lagenänderung bezüglich der Schneidkopf-Drehachsen zu Taumelbewegungen führen können. Durch eine gute Ausrichtung des Gesamtschwerpunktes und einer zumindest teilweise symetrischen Anordnung beider Schneidantriebe in Bezug auf die Drehachse des Schneidkopfes kann dies vermieden werden, und man erhält auch bei den kombinierten, raschen Positionsänderungen ein ruhiges Verhalten des Schneidkopfes.

Gemäss einem weiteren Ausgestaltungsgedanken werden die Wellen der Einzelantriebe koachsial zu der in Richtung der dritten Raumachse orientierten Schwenk- bzw. Drehachse ausgerichtet.

Ferner kann die Auflageebene durch reibungsvermindernde Mittel, insbesondere einen Borstenbesatz oder ein Luftkissen, als Tischfläche ausgebildet werden.

In der Folge wird die Erfindung nun an Hand einiger Ausführungsbeispiele mit weiteren Einzelheiten erläutert. Es zeigen:
- die Figur 1: typische Formen von Blechzuschnitten;
- die Figur 2: eine fertige Raumform einer Isolationsverschalung, nach dem Walzen und Zusammenfügen der Blechzuschnitte;
- die Figur 3: einen Arbeitstisch mit einem programmgesteuerten Schneidkopf;
- die Figur 4: einen Schneidkopf in grösserem Massstab.

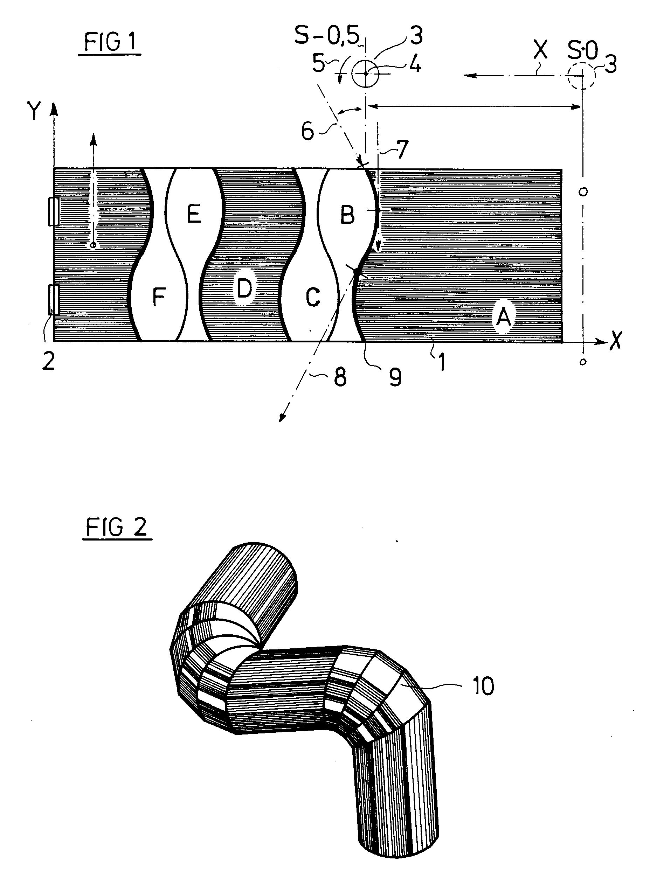

In der Figur 1 ist eine Blechtafel 1 dargestellt, auf welcher eine Anzahl Zuschnitte A - F eingezeichnet sind. Die Blechtafel 1 wird durch eine Vorschubeinheit 2, welche zum Beispiel eine an sich bekannte Magnetklemmvorrichtung aufweisen kann, in Richtung einer Y-Achse für wiederholte Schneidvorgänge vorwärts und rückwärts bewegt. Ein Schneidkopf 3 ist längs einer X-Achse, bevorzugt quer zu der Y-Achse verschiebbar angeordnet. Dabei weist der Schneidkopf 3 eine Verschwenk- beziehungsweise Verdrehbarkeit auf, so dass um seine eigene Achse 4 gemäss Pfeil 5 in verschiedene Schneidrichtungen gesetzt werden kann. Dieses an sich bekannte Bewegungsspiel von Blechtafel 1 und Schneidkopf 3 ist deshalb wichtig, weil dadurch die Schneidwerkzeuge in die, für krumme Schnitte stets wechselnde, optimale Schneidstellung bringbar sind. Der Schneidkopf beginnt stets seine erste Bewegung von einer Stellung S - 0 und fährt gemäss Programm zum Beispiel auf eine Stellung S - 0,5 und führt dann eine Drehbewegung gemäss Pfeil 5 aus und stellt sich in die richtige Schneidrichtung 6 ein. Da die auszuschneidende Kontur 9 vollständig gekrümmt ist, muss sich koordiniert, mit der Vorschubbewegung der Blechtafel 1 in Y-Richtung, der Schneidkopf ständig in die jeweils optimale Schneidrichtung für die je spezielle Form zum Beispiel gemäss Pfeil 7, 8 usw. einstellen. Die einzelnen Zuschnitte werden nach dem Erstellen der Schneidform gewalzt und aus den einzelnen Segmenten usw. können Isolierformen zum Beispiel ein doppelter Krümmer 10 hergestellt werden.

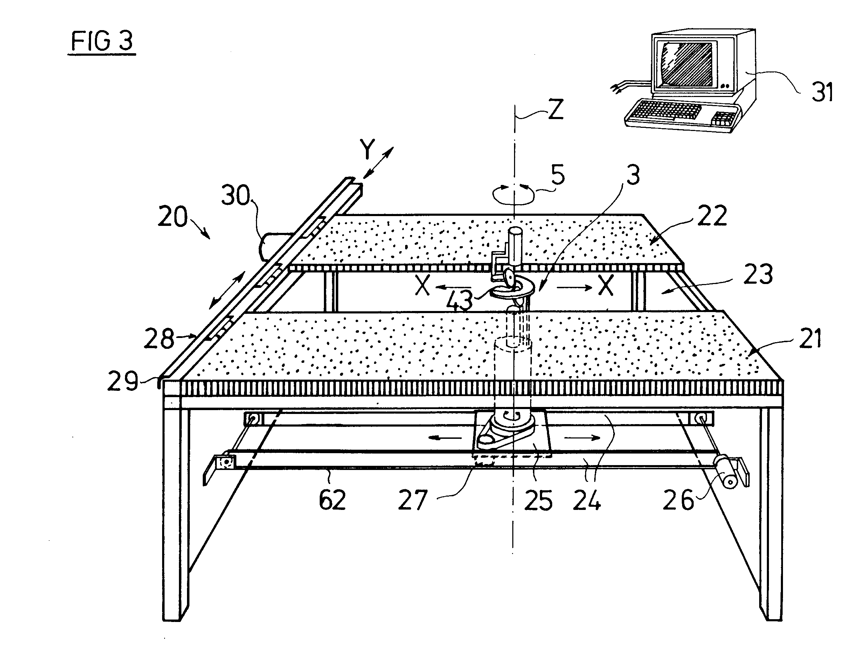

In der Figur 3 ist ein ganzer Arbeitstisch 20, mit einer vorderen Arbeitsauflageebene 21 sowie einer hinteren Arbeitsauflageebene 22, welche durch ein mittleres freies Arbeitsfeld 23 für die Bewegung des Schneidkopfes 3 in der X-Richtung unterbrochen sind, dargestellt. Der Schneidkopf 3 kann sich unabhängig von der Verschiebung in X-Richtung um die eigene Z-Achse gemäss Pfeil 5 verdrehen.

Die Verschiebung der X-Richtung des Schneidkopfes 3 erfolgt über Präzisionsführungen 24, auf welchen ein Schlitten 25 verfahrbar ist, und einem fernsteuerbarer Antriebsmotor 26 mit Kettenübertrieb zugeordnet ist. Die Verdrehbewegung (Pfeil 5) des Schneidkopfes 3 erfolgt ebenfalls über einen fernsteuerbaren Antriebsmotor 27, der direkt auf dem Schlitten 25 montiert ist.

Auf der linken Tischseite 28 ist eine Blechtransporteinrichtung 29 welche die Blechplatte selbst mittels eines programmgesteuerten Antriebsmotores 30 koordiniert bewegt, wobei alle Steuerbefehle von einem Rechner 31 ausgegeben werden.

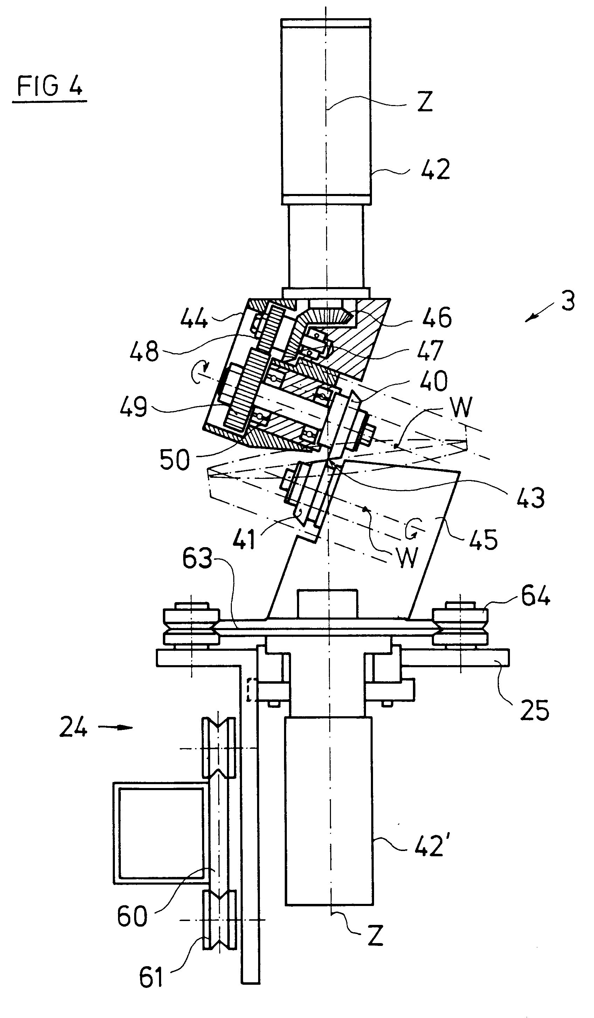

In der Figur 4 ist eine vorzugsweise Ausführungsform des Schneidkopfes 3 dargestellt, dabei sind beide rotierenden Schneidmesser 40 resp. 41 durch einen Antriebmotor 42 bzw. 42' angetrieben. Wesentlich ist nun, dass beide Antriebe 42, 42' eine gemeinsame Drehachse Z haben, welche bevorzugt durch die Schneidstelle, mit 43 bezeichnet, verläuft. Beide Schneidmesser 40, 41 sind in der Form von Kreismessern ausgebildet und werden über zwei bezüglich der Z-Achse gegengleiche Winkelgetriebe 44 resp. 45 angetrieben, welche je ein Kegelradpaar 46/47 sowie ein Stirnradpaar 48/49 aufweisen. Entsprechend der optimalen Neigung der Schneidscheiben 40, 41 sind beide, von dem Stirnrad 49 angetriebenen Messerwellen 50 parallel und weisen gleich geneigt ausgerichtete Achsen W auf. Durch die gegengleiche Anordnung der beiden Antriebsmotoren 42, 42' mit ihren jeweiligen Winkelgetrieben 44 resp. 45 sowie im wesentlichen identischen konstruktiven inneren Aufbau, fällt der gemeinsame Schwerpunkt zusammen mit der Schneidstelle 43 sowie der Drehachse Z. Dadurch entstehen auch bei sehr rascher Drehbewegung des ganzen Schneidkopfes 3 mit den laufenden Antrieben 42/42' durch die Kreiselkräfte der Messerwellen 50 keine Taumelkräfte.

Wie in der Figur 4 ferner ersichtlich ist, weisen die Präzisionsführungen 24 Parallelführungen 60 sowie Führungsrollen 61 auf, die über einen Kettenzug 62 (Figur 3) eine genaue Positionierung des Schneidkopfes 3 in X-Richtung erlauben.

Für die Verdrehbewegung weist der Schneidkopf 3 eine Drehscheibe 63 auf, welche in mehreren Führungsrädern 64 präzisionsgeführt sind. Der Schneidkopf 3 hat somit zwei präzise gesteuerte Bewegungsmöglichkeiten, um die eigene Achse Z, sowie senkrecht zu der Bildebene gemäss Figur 4 respektiv in X-Richtung gemäss Figur 1 und 3.

## Patentansprüche

1. Blechschneidemaschine mit einer Arbeits-Auflageebene, einer Blecktransporteinrichtung (29) entlang einer Tischseite der Auflageebene, sowie einen auf die Tischseite zu- und wegbewegbare und um eine Achse senkrecht zu Auflageebene verschwenkbaren bzw. drehbaren Schneidkopf (3), der im Bereich der Auflageebene Messer (40) und Gegenmesser (41) aufweist, wobei beide Messer (40, 41) als Kreismesser ausgebildet und angetrieben sind, dadurch gekennzeichnet, dass dem Schneidkopf (3) und der Blechtransporteinrichtung (29) je Einzelantriebe (26, 27, 30, 42, 42') zugeordnet sind, dass die je momentane Vorschubgewschwindigkeit der Blechtransporteinrichtung (29) von einem Rechner (31) vorgegeben wird, und die Einzelantriebe (26, 27, 42, 42') des Schneidkopfes (3) derart gesteuert sind, dass die Tangentialgeschwindigkeit der Kreismesser (40, 41) in Vorschubrichtung eine Geschwindigkeitkomponente aufweist, die in Richtung und Grösse der Vorschubgeschwindigkeit mindestens näherungsweise entspricht.

2. Blechschneidemaschine nach Anspruch 1, dadurch gekennzeichnet, dass der Schneidkopf (3) über einen steuerbaren Antrieb (26) vorzugsweise quer zu der Tischseite verschiebbar angeordnet ist.

3. Blechschneidemaschine nach Anspruch 1 oder 2, dadurch gekennzeichnet, dass der Schwerpunkt des Schneidkopfes (3) einschliesslich der Einzelantriebe (42, 42') mindestens näherungsweise auf der Schwenk- bzw. Drehachse (Z) des Schneidkopfes (3) liegt.

4. Blechschneidemaschine nach einem der Ansprüche 1 bis 3, dadurch gekennzeichnet, dass die Wellen der Einzelantriebe (42, 42') koachsial zu der in Richtung der dritten Raumachse orientierten Schwenk- bzw. Drehachse (Z) ausgerichtet sind.

5. Blechschneidemaschine nach einem der Ansprüche 1 bis 4, dadurch gekennzeichnet, dass die Auflageebene (21, 22) durch reibungsvermindernde Mittel, insbesondere einem Borstenbesatz oder Luftkissen, als Tischfläche ausgebildet sind.

## Claims

1. A sheet metal cutting machine having a work support plane, a sheet metal transport device (29) along one table face of the support plane, and having a cutting head (3) which can swivel or rotate about an axis perpendicular to the support plane, which can move towards and away from the table face, and which has a cutter (40) and an opposing cutter (41) in the region of the support plane, wherein both cutters (40, 41) are constructed and driven as circular cutters, characterised in that individual drives (26, 27, 30, 42, 42') are associated with the cutting head (3) and the sheet metal transport device (29) in each case, that the instantaneous forward feed velocity of the sheet metal transport device (29) is predetermined by a computer (31) in each case, and the individual drives (26, 27 42, 42') of the cutting head (3) are controlled in such a way that the tangential velocity of the circular cutters (40, 41) in the direction of forward feed comprises a component of velocity, the direction and magnitude of which at least approximately correspond to the forward feed velocity.

2. A sheet metal cutting machine according to claim 1, characterised in that the cutting head (3) is disposed so that it can be displaced, preferably transversely to the table face, via a controllable drive (26).

3. A sheet metal cutting machine according to claim 1 or 2, characterised in that the centre of gravity of the cutting head (3), including the individual drives (42, 42') is situated at least approximately on the swivelling axis or axis of rotation (Z) of the cutting head (3).

4. A sheet metal cutting machine according to any one of claims 1 to 3, characterised in that the shafts of the individual drives (42, 42') are aligned coaxially with the swiveling axis or axis of rotation (Z), which is oriented in the direction of the third three-dimensional axis.

5. A sheet metal cutting machine according to any one of claims 1 to 4, characterised in that the support plane (21, 22) is formed by friction-reducing means, comprising a bristle trimming or an air cushion in particular, as the table surface.

## Revendications

1. Machine à couper la tôle avec un plan de pose et de travail, un dispositif de transfert de tôle (29) le long d'un bord de la table du plan de pose ainsi qu'une tête de coupe (3) pouvant pivoter ou tourner autour d'un axe perpendiculaire au plan de pose et pouvant se déplacer selon un mouvement de va et vient par rapport au bord de la table, qui présente dans la zone du plan de pose un couteau (40) et un contre couteau (41) où les deux couteaux (40, 41) sont réalisés sous forme de couteaux circulaires et ils sont entraînés,
caractérisée en ce que
sont associés respectivement à la tête de coupe (3) et au dispositif de transfert de tôle (29) des entraînements individuels (26, 27, 30, 42, 42'), que la vitesse instantanée du dispositif de transfert de tôle (29) est commandée par un calculateur (31), et les moteurs individuels (26, 27, 42, 42') de la tête de coupe (3) sont commandés de telle sorte que la vitesse tangentielle des couteaux circulaires (40, 41) présente dans le sens d'avancement une composante de vitesse qui correspond en direction et importance à la vitesse d'avancement, au moins de manière rapprochée.

2. Machine de coupe de tôle selon la revendication 1,
caractérisée en ce que
la tête de coupe (3) est disposée en coulissement grâce à un entraînement (26) qu'on peut commander de préférence transversalement par rapport au bord de la table.

3. Machine de coupe de tôle selon la revendication 1 ou 2,
caractérisée en ce que
le centre de gravité de la tête de coupe (3), y compris les entraînements individuels (42, 42') se trouve au moins de manière approchée sur l'axe de pivotement ou de rotation (Z) de la tête de coupe (3).

4. Machine de coupe de tôle selon l'une des revendications 1 à 3,
caractérisée en ce que
les arbres des moteurs individuels (42, 42') sont coaxiaux à l'axe (Z) de pivotement ou de rotation orienté en direction du troisième axe de l'espace.

5. Machine de coupe de tôle selon l'une des revendications 1 à 4,
caractérisée en ce que
les plans de pose (21, 22) sont constitués sous forme de table par des moyens réduisant le frottement, notamment un garnissage de brosses ou de coussins d'air.
